# EUROPEAN PATENT SPECIFICATION

(11) **EP 1 099 608 B1**
(45) Date of publication and mention of the grant of the patent: **04.03.2009**
(21) Application number: 00309910.8
(22) Date of filing: 08.11.2000
(51) Int. Cl.: B60S 1/08, B60S 1/34

(54) **Water-drop proof structure for wiper motor apparatus**
Wasserdichte Stuktur für einen Wischermotor
Structure étanche pour moteur d'essuie-glace

(30) Priority: 11.11.1999 JP 32119999; 07.04.2000 JP 2000106144
(43) Date of publication of application: 16.05.2001
(73) Proprietor: Mitsuba Corporation, Kiryu-shi, Gunma-ken (JP)
(72) Inventor: Okabe, Hiroji, Ohta-shi, Gunma-ken (JP); Amagasa, Toshiyuki, Ohta-shi, Gunma-ken (JP)
(74) Representative: Smith, Norman Ian

(56) References cited:
- DE-A- 3 632 694
- DE-A- 19 548 828
- DE-U- 9 206 269
- FR-A- 2 699 758
- FR-A- 2 748 436
- US-A- 4 472 854

## Description

### FIELD OF THE INVENTION

The present invention relates to a wiper motor device which are used in vehicles such as automobiles and trucks, etc.

### BACKGROUND OF THE INVENTION

There exists a type of a wiper motor device in which an output shaft, which is the pivot axis of the wiper, that outputs motive power via a reduction mechanism and a link mechanism, is disposed at a position adjacent to a drive circuit portion. The drive circuit portion (circuit board, etc.) incorporates circuits which control execution of various types of wiping actions such as intermittent wiping, etc. and is disposed inside a body sheet material (glass plate and body outer plate, etc.,). The tip end portion of the output shaft extends through an attaching hole formed in the body plate material so that it protrudes outside the body, and a wiper arm is connected to the protruding tip end portion of the shaft. In this type of device, the drive circuit portion is located in an accommodation casing which is closed by a cover in order to prevent foreign substances from adhering to the drive circuit portion. The cover is fixed to the accommodation casing by means of engagement claws projecting from the accommodation casing locating in holes opened in the cover.

In such a wiper motor device, it is necessary to prevent water from seeping into the body interior through the attaching hole of the output shaft. Therefore, conventionally, a waterproof member, such as a grommet, has been attached to the attaching through holes of the output shaft, thereby acting as a seal to prevent water from seeping into the body interior.

However, even when a waterproof member such as a grommet is attached, there are cases where water can seep into the body interior through a slight gap at the attaching through holes of the output shaft, for example during periods of heavy rain or washing the vehicle with high pressure water. Also, in the case where the drive circuit portion is disposed downwardly of the output shaft, there is a risk that water seeps into the body interior, flows into the drive circuit portion side and further invades the accommodation casing between the cover and accommodation casing or through the engagement holes. Therefore, if water or humidity that thus entered the accommodation casing comes into contact with the drive circuit portion, it may cause a failure of the drive circuit portion, and this constitutes a problem. The present invention has been developed to solve this problem.

DE-92062694 describes a wiper motor assembly in which an output shaft of the motor is supported by a sleeve formed integrally with a gear frame.

FR 2699758 describes a wiper motor assembly in which an end bracket closes an opening portion of a yoke for accommodating a driving device. The bracket is formed integrally with a gear case which is closed by a cover through which protrudes an output shaft having an output gear. A sleeve on the cover rotatably supports the shaft. Other prior art arrangements are described in DE 3632694, US 4472854 and FR 274836.

### SUMMARY OF THE INVENTION

The present invention was developed to solve these problems and shortcomings in view of the abovementioned situations.

According to the present invention there is provided a wiper motor device having a drip-proof structure, said device having a drive circuit portion of a wiper motor disposed adjacent to an output shaft of the wiper motor, said output shaft being rotatably supported by a sleeve; said drip-proof structure including a cover for shielding an upper opening of an accommodation casing for accommodating said drive circuit portion, said cover having an extension portion on its upper surface which extends to a position such that the outer circumference of the sleeve is surrounded by said cover and fits over the output shaft, characterised in that, a guide rib or ribs for preventing the water which flows from the extension portion onto the upper surface of the cover from flowing to an engagement fixing portion, which engagedly secures the cover to accommodation casing, are provided on the upper surface of the cover, said engagement fixing portion being provided on a side surface portion which is formed by folding back the upper surface of the cover downwardly and engagedly fixes to said casing.

By this construction, even though water may seep along the output shaft, that water will flow on the cover from the output shaft via the extension portion, wherein it is possible to prevent water from entering the accommodation casing, and the drive circuit portion can be effectively protected from water.

In such a construction, a cylindrical portion to be fitted over the sleeve may be formed on said extension portion of said cover, and the base side of a waterproof cap attached to said output shaft is located around the tip end side of said cylindrical portion to create a drip-proof structure.

Also, a guide rib or ribs may be formed on the upper surface portion of said cover, said guide rib or ribs being arranged to guide water flowing on said upper surface so as to prevent said water from flowing to a fixing portion which fixes said accommodation casing and cover.

Embodiments of the invention will be described now by way of example only, with particular reference to the accompanying drawings. In the drawings:
FIG. 1 is a plan view of a wiper motor device according to a first embodiment;
FIG. 2 is a side view of the wiper motor device;
FIG. 3 is a side view, partly in cross-section, showing an assembled state of the wiper motor device;
FIG. 4(A), (B), (C) and (D) are, respectively, a plan view, a front elevational view, a left side view, and right side view of a cover;
FIG. 5 is plan view of a wiper motor device according to the second embodiment;

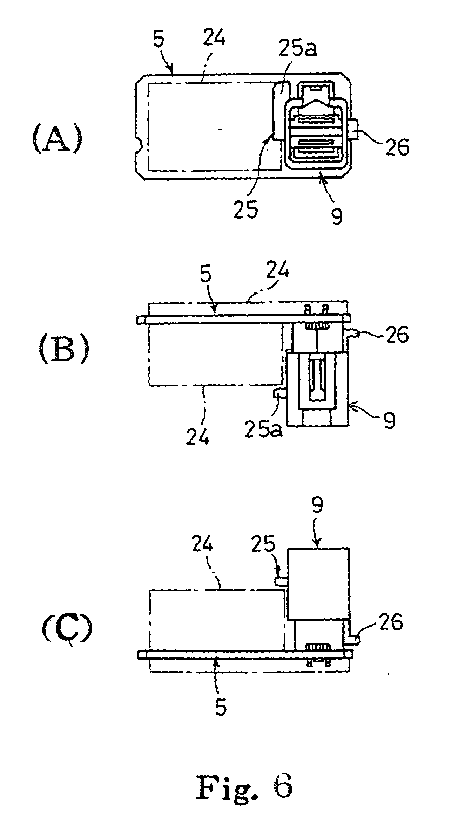

FIG. 6 shows a circuit board provided with a coupler, where (A) is a front elevational view, (B) is a plan view, and (C) is a bottom view;
FIG. 7 shows a gear frame, wherein (A) is a front elevational view and (B) is a cross-sectional bottom view taken along the line b-b in (A);
FIG. 8 shows a holder, wherein (A) is a front elevational view, (B) is a side elevational view, and (C) is a bottom view;
FIG. 9 is a partially disassembled perspective view showing the assembly process;
FIG. 10 is a perspective view showing the state after the assembly is complete;
FIG. 11 also shows a state after the assembling is completed, wherein (A) is a sectional bottom view, and (B) is a cross-sectional view taken along the line b-b in (A);

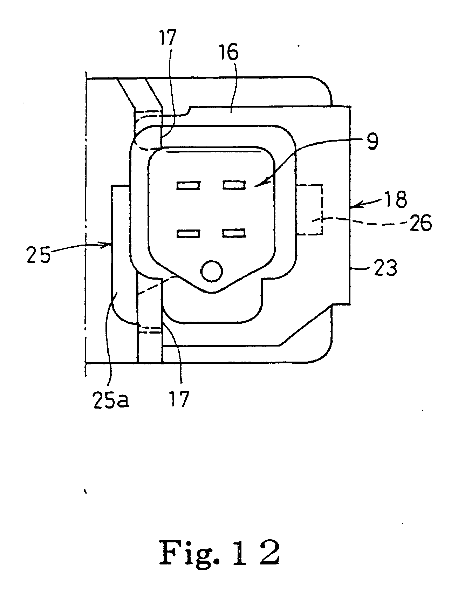

FIG. 12 is a sectional view taken along the line X-X in FIG. 11;
FIG. 13 is a partially disassembled perspective view showing a wiper motor device according to the third embodiment; and

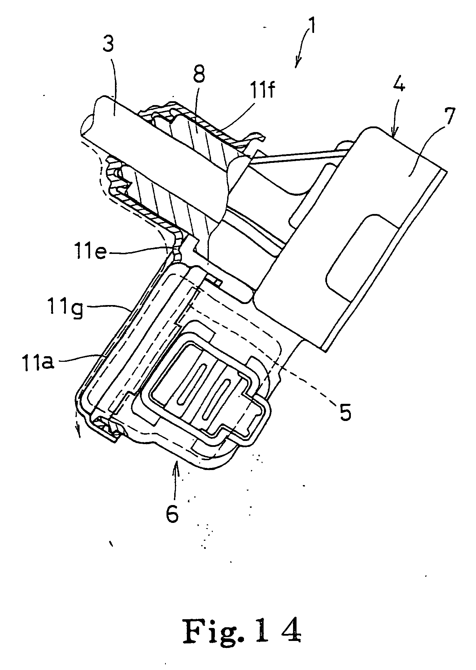

FIG. 14 is a side elevational view, partly in section, of a wiper motor device according to a fourth embodiment.

### EMBODIMENTS OF THE INVENTION

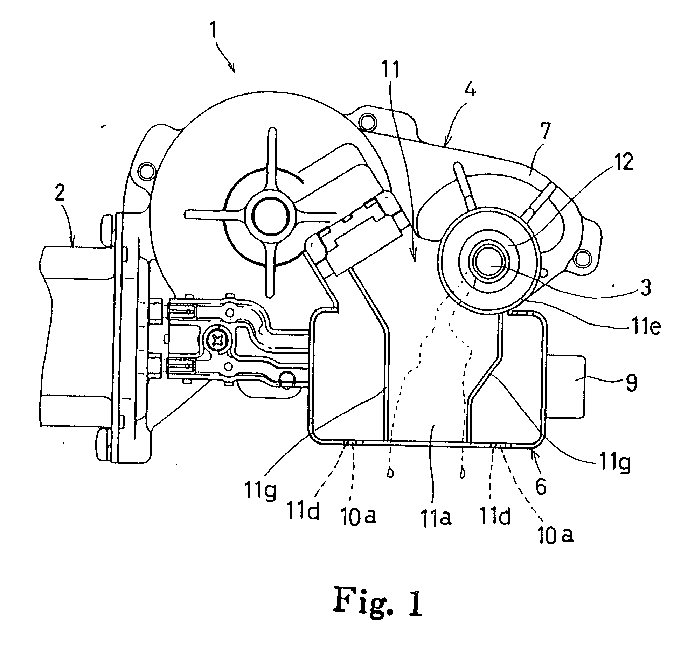

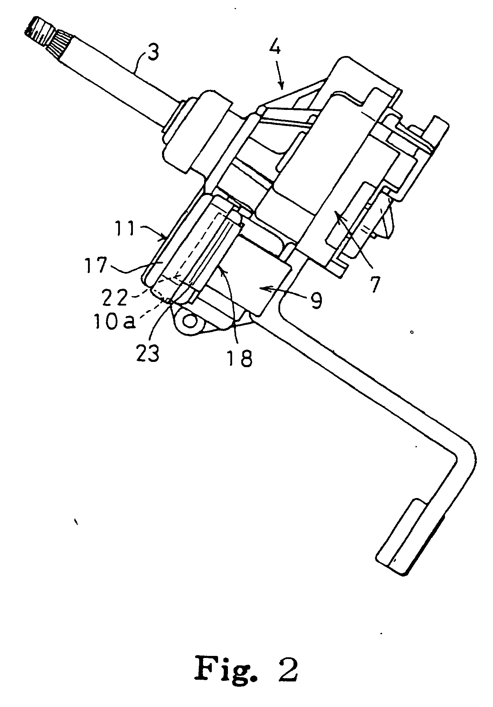

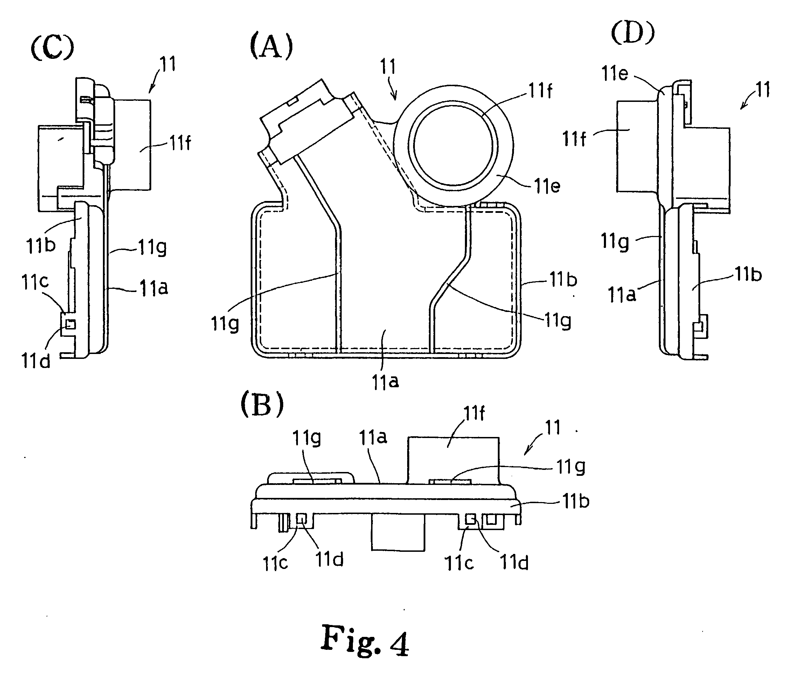

Referring to Figures 1 to 4 a wiper motor device 1 is provided to wipe the rear window glass surface of a vehicle. The wiper motor device 1 is disposed inside the body plate material of the vehicle (glass plate and body plate (not illustrated). The device comprises a motor portion 2 provided with an electric motor (not illustrated), gear portion 4 including a reduction mechanism (not illustrated), a link mechanism (not illustrated), an output shaft (which is the pivot axis of the wiper) 3, and a drive circuit portion 6 provided with a circuit board 5, etc. The electric motor is driven and controlled by circuits incorporated in the circuit board 5, and the motive power of the motor is transmitted from the output shaft 3 via the reduction mechanism and the link mechanism. This basic construction is the same as that of conventional devices.

A gear frame 7 accommodates the abovementioned gear portion 4. The output shaft 3 is rotatably supported in a sleeve 8 formed integrally with the gear frame 7, and the tip end of the output shaft 3, which protrudes from the sleeve 8, extends through an attaching hole (not illustrated) formed in the body plate material so that it protrudes outside the body (that is, outside the body plate material). The base end portion of a wiper arm (not illustrated) is connected to the protruding tip end portion of the shaft 3. Further, a grommet (not illustrated) is attached to the attaching hole through which the output shaft 3, extends and acts as a seal to prevent water from seeping into the through hole and into the body interior.

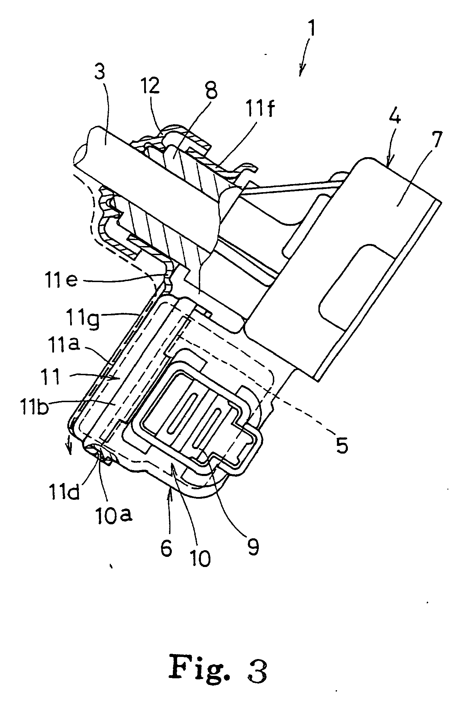

In the present embodiment, the wiper motor device I is, as shown in FIG. 3, attached to the body side so that the tip end side of the output shaft 3 is extends obliquely upward when view in side elevational and the drive circuit portion 6 is located obliquely downwardly of the base end portion of the output shaft 3. For convenience of explanation, the tip end side of the output shaft 3 will be referred to as "upward", and the base end side will be referred to as "downward" in a situation where the wiper motor device I is not attached to the body side.

The drive circuit portion 6 is accommodated in an accommodation casing 10, which is formed integrally with the gear frame 7, and wires (not illustrated) and a connector 9, etc., to which an electric motor is connected are attached to the circuit board 5. The upper side of the accommodation casing 10 is open, and the upper opening is closed by a cover 11.

The cover 11 is formed to have a side portion 11b which depends downwardly from the outer circumferential edge of a plate-like upper surface portion 11a. Further, a plurality of tongues 11c are formed to depend downwardly from the lower edge of the side portion 11b. Engagement holes 11d are provided to be open on the tongues lie. Engagement claws 10a corresponding to the engagement holes lid of the cover are provided on the upper portion of the accommodation casing so as to protrude therefrom. When the cover 11 is placed over the upper opening of the accommodation casing 10, the cover 11 is secured to the accommodation casing 10 by engaging the engagement claws 10a in the engagement holes lid.

An extension portion lie is formed integrally with the upper surface portion 11a of the cover 11 and is located in a position in which it surrounds the outer circumference of the sleeve 8 that pivotally supports the output shaft 3. A cylindrical portion 11f locates closely around the outer circumference of the sleeve 8 and is integrally formed with the extension portion lie. The cylindrical portion 11f extends upwardly from the extension portion 11e. The upper end of the sleeve 8 protrudes from the upper end of the cylindrical portion 11f, and as described above, the output shaft 3 protrudes from the upper end of the sleeve 8.

Reference numeral 12 indicates a waterproof cap. The waterproof cap 12 is generally cylindrical and has a diameter which increases stepwise downwardly (two steps in the present embodiment). The upper end portion of the cap 12 engages with a lower end portion of the protruding part of output shaft 3 and contacts the circumference of the shaft in a slightly pressure-fitted state. The lower portion of the waterproof cap 12 is located around the outer circumference of the upper part of the cylindrical portion 11f of the abovementioned cover 11, so that a labyrinth path is formed between the lower part of the waterproof cap 12 and the upper part of the cylindrical portion 11f.

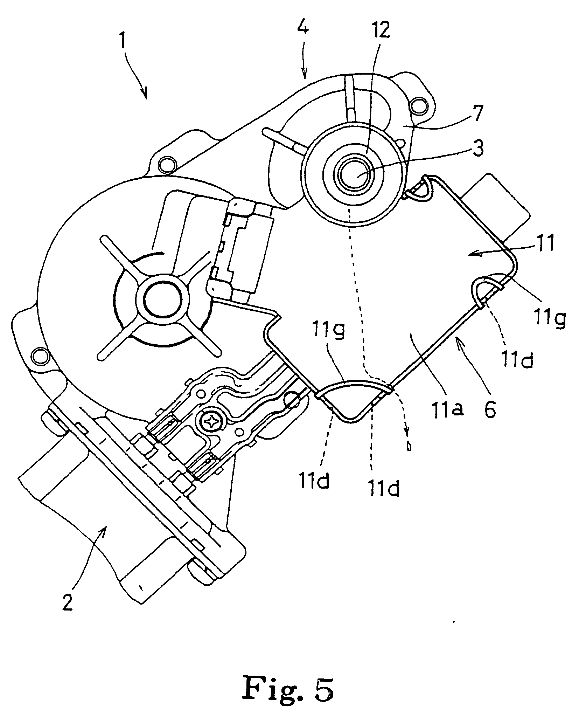

Guide ribs 11g are formed on the upper surface portion 11a of the cover 11 in a state where the wiper motor device 1 is attached at the body side. The guide ribs 11g can guide water flowing on the upper surface portion 11a so that the water does not flow into the engagement holes 11d. In the present embodiment, the guide ribs 11g are, as shown in FIG. 1, located inwardly of the engagement holes lid with respect to the output shaft 3. However, the configuration of the ribs is not limited to this arrangement. For example in a second embodiment as shown in FIG. 5, the guide ribs 11g may be arranged so as to surround the engagement holes 11d. That is, since the guide ribs 11g are provided, according to the attached state of the wiper motor device 1 and position of the engagement holes 11d, to guide water on the upper surface portion of the cover so that water flowing thereon does not flow into the engagement holes 11d, the shape and/or position of the guide ribs 11g are not limited to any particular configuration.

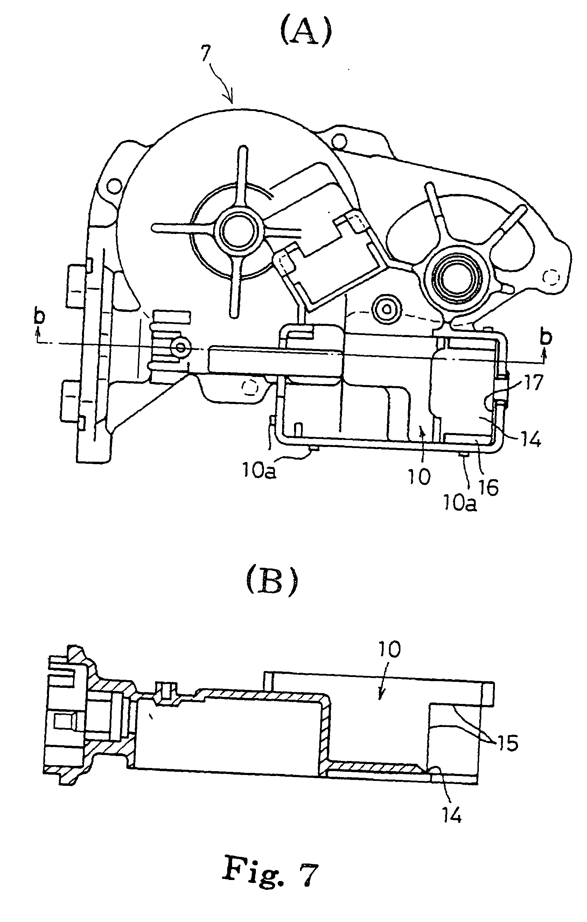

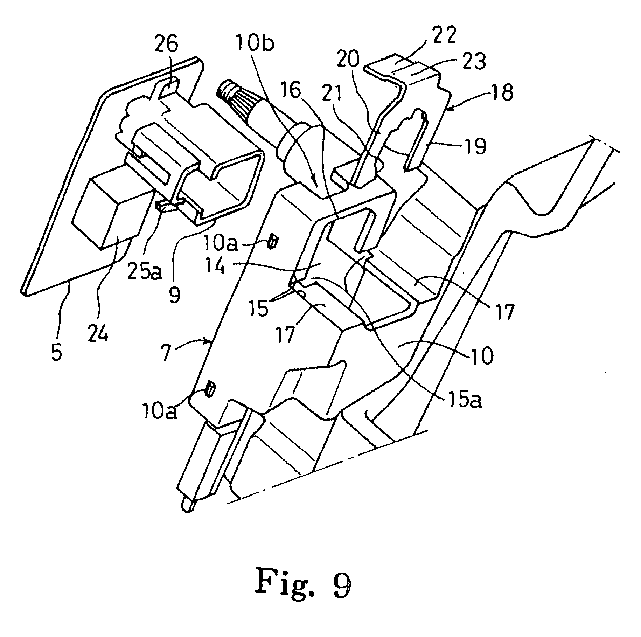

As shown in FIGS. 7 to 10, the accommodation casing 10 is disposed at the lower part of the main surface (hereinafter referred to the front elevation) at the side from which the output shaft 3 of the gear frame 7 protrudes, and is formed so as to define a rectangular opening which is similar in shape to the circuit board 5 but larger in size than the circuit board 5. An insertion hole 14 into which a connector 9 can be inserted is provided on the bottom wall of the accommodation casing 10 and a cut-away portion 15 is formed along three side walls of the insertion hole 14 of the accommodation casing 10. An external force receiving portion 16 that receives an external force applied to the connector 9 is formed on the rear of the cut-away portion 15. A twisting force receiving portion 17 that receives a twisting force applied to the connector 9 is formed at one side of the notched portion 15.

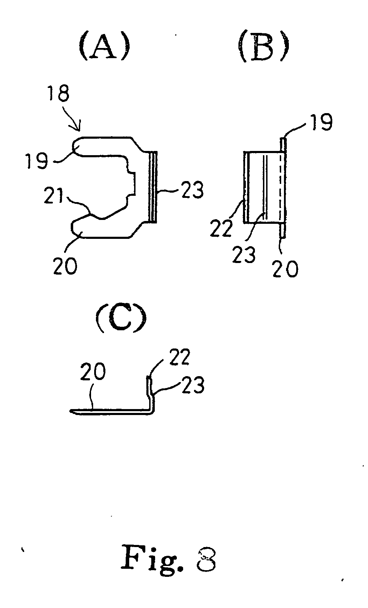

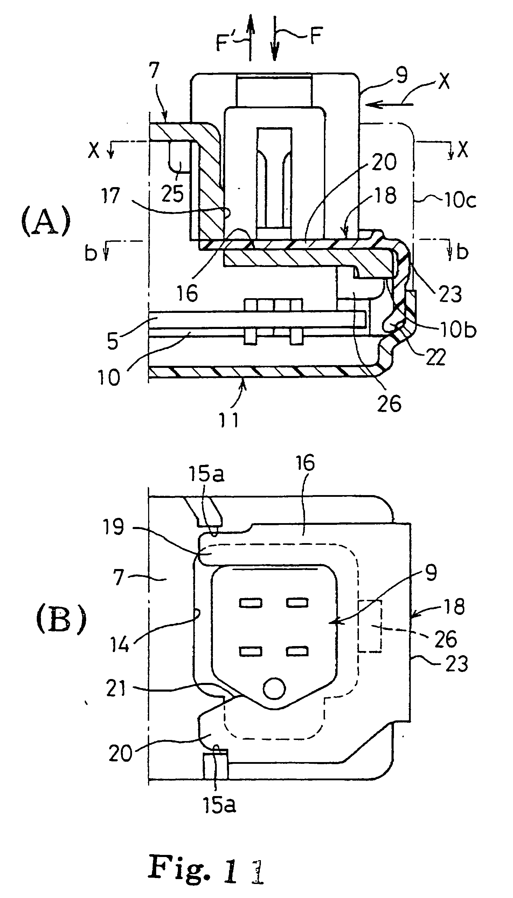

In the first embodiment, a holder 18 for the wiper motor device 1 is made of resin and is, as shown in FIG. 8, integrally formed so as to be bifurcated like a fork in its front elevational view. The inner spacing of a pair of bifurcated insertion portions 19 and 20 is set to be almost equal to the outer diameter of the connector 9, wherein the pair of bifurcated insertion portions can be fitted onto the outer circumference of the connector 9. An engagement part 21 that looks roughly like an isosceles triangle in its front elevational view is formed to protrude inwardly at the tip end portion of the inside of one of the insertion portions (hereinafter referred to as a lower insertion portion). The engagement part 21 is arranged to engage with the lower corner of the coupler 9 when a holder 18 is fitted to the connector 9, whereby the holder 18 itself is prevented from disengaging therefrom. A fixing part 22 whose side elevational view is roughly rectangular is formed to extend at a right angle to both insertion portions 19 and 20 of the holder 18, and a bending part 23 is bent to form an intermediate portion of the fixing part 22 so that the tip end thereof can be moved in parallel to the direction of both insertion portions 19 and 20. The tip end portion of the fixing part 22 is set to be engaged with the cover 11 from the outside when the holder 18 is fitted to the connector 9. In addition, as shown in FIG. 11(A), the bent part 23 is configured so that there is a gap between the inner circumferential side thereof and the outer wall of the accommodation casing 10, whereby it is possible to prevent it from interfering with the edge part of the external force receiving portion 16.

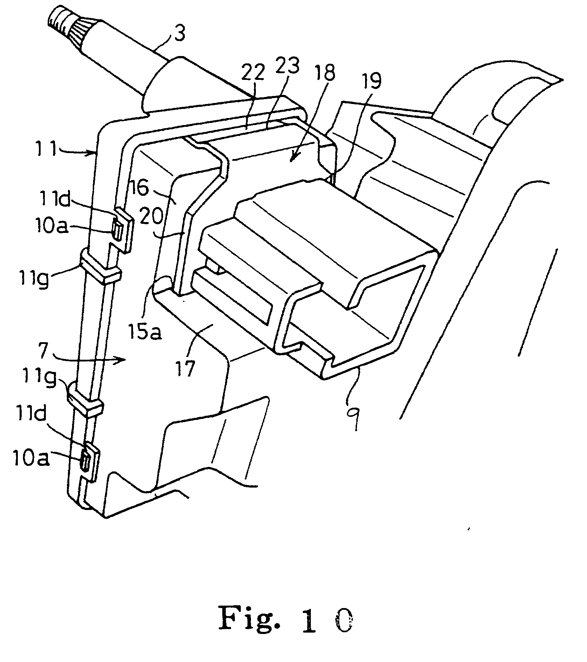

When the connector 9 is accommodated in the accommodation casing 10, the circuit board 5 is positioned with respect to its forward, vertical and left and right directions since the front main surface (hereinafter referred to the front surface) is brought into contact with the bottom (rear surface) of the accommodation casing 10, and the outer circumference is brought into contact with the side wall internal surface of the four sides (hereinafter referred to the vertical and left and right sides) of the accommodation casing 10. Also, as shown in FIG. 10, the connector 9 protrudes from the notched portion of the gear frame 7, and the side (hereinafter referred to the left side) of a controller 24 is brought into contact with the twisting force receiving portion 17.

Subsequently, as the holder 18 is fitted onto the outer circumference of the connector 9 at the cut-away portion 15, the holder 18 closes the insertion hole 14 and assumes a state where it is engaged with a part of the rear surface of the connector 9. Therefore, the circuit board 5 is prevented by the holder 18 from coming off rearwardly.

In addition, as referred to in FIG. 11(B), since the engagement part 21 of the lower insertion portion 20 of the holder 18 will be engaged with a part of the outer circumference of the coupler 9, the holder 18 itself can be prevented from disengaging from the outer circumference of the coupler 9. Further, the tip end portion of each insertion portions 19 and 20 is inserted into the groove 15a secured downwardly of the twisting force receiving portion 17 of the cut-away portion 15, whereby the connector 9 is prevented from moving out of the insertion hole 14 even in the case where the gear frame 7 moves after the holder 18 is fitted to the connector 9, and the circuit board 5 can be prevented from falling out from the accommodation casing 10.

A wiper motor device 1 produced as described above is installed below the window of a vehicle, and when a mating coupler (not illustrated) wired at the vehicle side is connected to the connector 9, an insertion force generated by the mating coupler indicated by the arrow F in FIG. 11(A) is applied to the connector 9. If the insertion force F is applied to the circuit board 5, there is a risk that the circuit board 5 itself and the controller 24 (electric wires, electric components, and soldered parts) may be damaged, wherein the reliability of the circuit board 5 is reduced. However, since, in the present embodiment, the external force receiving portion 16 of the gear frame 7 is engaged in the connector 9 via the holder 18, the insertion force F of the mating coupler can be received by the external force receiving portion 16 of the gear frame 7 via the holder 18, wherein the insertion force F of the mating coupler can be prevented from being applied to the circuit board 5, and it is possible to prevent the circuit board 5 from being damaged by the insertion force of the mating coupler into the connector 9.

Also, even though a twisting force indicated by the arrow X in FIG. 11(A) is applied when inserting the mating coupler into the connector 9, the side of the connector 9 is brought into contact with the twisting force receiving portion 17, wherein the left engagement piece 25 is brought into contact with the rear side of the gear frame 7, the right engagement piece 26 is brought into contact with the end portion of the accommodation casing opening 10b of the gear frame 7, and, as shown in FIG. 10, the extension portion 25a of the left engagement piece 25 is engaged with the edge of the twisting force receiving portion 17. As a result the gear frame 7 can receive stress applied to the connector 9. Therefore, the twisting force X is prevented from being applied to the circuit board 5. Also, the circuit board 5 can be prevented in advance from being damaged by the twisting force X when inserting the mating coupler into the connector 9.

When the mating coupler is disconnected from the connector 9, the force F' is generated. Since the left engagement piece 25 of the connector 9 is brought into contact with the rear side of the gear frame 7 and the right engagement piece 26 is brought into contact with the end of the accommodation casing opening 10b of the connector 9, the gear frame 7 does not directly receive the disconnecting force, whereby it is possible to prevent the circuit board 5 in advance from being damaged.

Further, in this embodiment, since the cut-away portion 15 is formed at the side wall of the insertion hole 14 of the accommodation casing 10, the weight of the gear frame 7 can be further lightened in comparison with a type such as shown in dot-dash line in Fig. 11(A) in which a portion 10c surrounding the entire circumference of the connector 9 is formed at the insertion hole 14 of the coupler 9 of the accommodation casing 10 of the gear frame, and the connector 9 can be exposed at the cut-away portion 15. Therefore, the operation of coupling the mating coupler into the connector 9 can be facilitated.

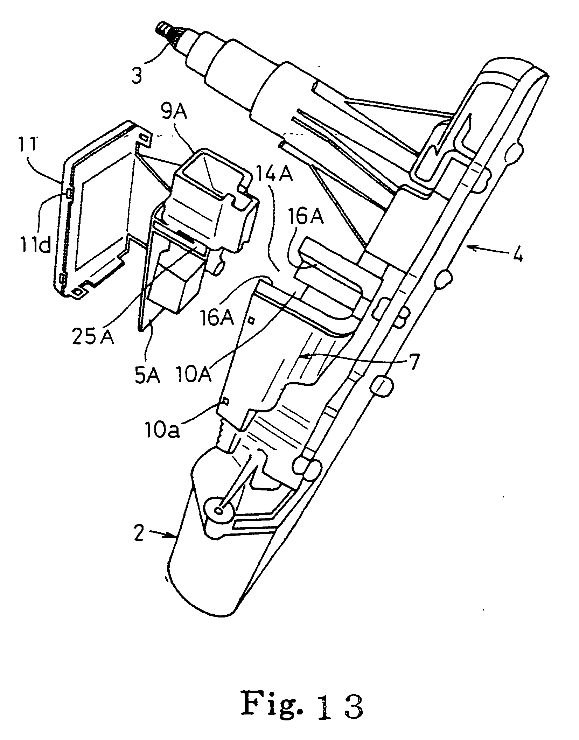

A third embodiment is shown in FIG. 13. In this construction the circuit board 5A is inserted into the accommodation casing 10A, and the connector 9A extends at a right angle with respect to the axial direction of the output shaft 3. The connector 9A is fixed laterally of the circuit board 5A and is laterally inserted into the insertion hole 14A of the accommodation casing 10A from the rear. When the circuit board 5A is accommodated in the accommodation casing 10A, the circuit board 5A is positioned with respect to the forward and four sides (hereinafter called vertical and left and right directions) of the accommodation casing 10A since the front side main surface (hereinafter called the front side) is brought into contact with the bottom (rear side) of the accommodation casing 10A and the outer circumference is brought into contact with the four internal sides of the casing 10A. Thereafter, when the cover 11 is placed on the casing 10A, the cover 11 presses the circuit board 5A from the outside, wherein the circuit board 5A is completely prevented from coming out from the accommodation casing 10A. In this state, even though an insertion force and/or a twisting force are applied to the coupler 9 when connector the mating coupler to the connector 9A, the gear frame 7 can directly receive such forces from the connector 9A because the flange portion 16A of the gear frame 7 is fitted in a retaining groove of the connector 9A. Therefore, such forces will not be applied to the circuit board 5A, and it is possible to prevent the circuit board 5A from being damaged by such forces.

In a construction of the type described above, the wiper motor device 1 is attached to the body side in such a way that the drive circuit portion 6 is positioned downwardly of the output shaft 3. The extension portion lie is formed on the cover 11 to enclose the upper opening of the accommodation casing 10, in which the drive circuit portion 6 is accommodated, so as to extend to the sleeve 8 which pivotally supports the output shaft 3. The cylindrical portion 11f that is fitted to the outer circumference of the sleeve 8 is made to extend upwardly from the extension portion lie, and the lower end of the waterproof cap 12 pressure-fitted and attached to the output shaft 3 is externally fitted around the upper part of the cylindrical portion 11f.

As a result, even in the case where water seeps inside the body, for example, from the attaching hole portion of the body plate material along the output shaft 3, such water flows, as shown in FIG. 3, onto the upper surface portion 11a along the outer circumferential side of the cylindrical portion 11f from the outer circumferential side of the waterproof cap 12 and flows downward on the upper surface portion 11a. Accordingly, problems which might arise from water flowing between the gear frame 7 and the accommodation casing 10 and invading the accommodation casing 10 are prevented. Thus it is possible to effectively protect the circuit board 5 in the accommodation casing 10 from the effects of moisture.

In addition, since the cover 11 is fixed to the accommodation casing 10, the cylindrical portion 11f will not move at all. However, the waterproof cap 12 is slightly pressure-fitted to the output shaft 3 and thus rotates along with the output shaft 3. Further, since a labyrinth path resulting from the edge of the cylindrical portion 11f overlapping that of the waterproof cap 12 is employed, no adverse influence is applied to the drive of an electric motor by using the waterproof cap 12, wherein it is possible to favorably provide a drip-proof effect.

Still further, in embodiments in accordance with the invention, since a construction is employed, in which water flowing downward on the upper surface portion 11a of the abovementioned cover 11 is guided so as not to reach the engagement holes 11d by the guide rib 11g formed on the upper surface portion 11a, it is possible to securely prevent water from seeping through the engagement holes 11d, wherein a further improved drip-proof structure can be achieved.

Also, it will be appreciated that the present invention is not limited to the abovementioned embodiments. Without providing a waterproof cap as a separate member, the upper end portion of the cover cylindrical portion 11f may be constructed as an integral structure in which it is fitted to the output shaft 3 protruding from the upper end of the sleeve 8 in a drip-proof state, wherein effects similar to the above can be achieved.

## Claims

1. A wiper motor device (1) having a drip-proof structure, said device having a drive circuit portion (6) of a wiper motor disposed adjacent to an output shaft (3) of the wiper motor, said output shaft (3) being rotatably supported by a sleeve (8);
said drip-proof structure including a cover (11) for shielding an upper opening of an accommodation casing (10) for accommodating said drive circuit portion (6), said cover (11) having an extension portion (11e) on its upper surface (11a) which extends to a position such that the outer circumference of the sleeve (8) is surrounded by said cover (11) and fits over the output shaft (3), whereby an engagement fixing portion (10a, 11d) engagedly secures the cover (11) to the accommodation casing (10), **characterised in that**,
a guide rib or ribs (11g) for preventing the water which flows from the extension portion (11e) onto the upper surface (11a) of the cover (11) from flowing to the engagement fixing portion (10a, 11d), are provided on the upper surface (11a) of the cover (11), said engagement fixing portion (10a, 11d) being provided on a side surface portion (11b) which is formed by folding back the upper surface of the cover (11) downwardly and engagedly fixes to said accommodation casing (10).

2. A drip-proof structure for a wiper motor device according to claim 1, **characterized in that**
a cylindrical portion (11f) fitted over the sleeve (8) is formed on said extension portion (11e) of said cover (11), and the base side of a waterproof cap (12) attached to said output shaft (3) is located around the tip end side of said cylindrical portion (11) to create a drip-proof structure.

## Patentansprüche

1. Eine Wischermotorvorrichtung (1) mit einer tropfsicheren Struktur, die einen Antriebsschaltungsbereich (6) eines Wischermotors aufweist, die benachbart zu einer Ausgangswelle (3) des Wischermotors angeordnet ist, während die Ausgangswelle (3) drehbar durch eine Muffe (8) unterstützt ist;
die tropfsichere Struktur umfasst eine Abdeckung (11) zum Abdecken einer oberen Öffnung eines Unterbringungsgehäuses (10) zum Unterbringen des Antriebsschaltungsbereichs (6), während die Abdeckung (11) einen Ausdehnungsbereich (11e) auf der oberen Oberfläche (11a) aufweist, der sich zu einer Position erstreckt, so dass der äußere Umfang der Muffe (8) von der Abdeckung (11) umgeben ist und über die Ausgangswelle (3) passt, wodurch ein Eingriffbefestigungsbereich (10a, 11d) eingreifend die Abdeckung (11) an dem Unterbringungsgehäuse (10) sichert, **dadurch gekennzeichnet, dass**
eine Führungsrippe oder-rippen (11g) auf der oberen Oberfläche (11a) der Abdeckung (11) bereitgestellt sind, um das Wasser, das von dem Ausdehnungsbereich (11e) auf die obere Oberfläche (11a) der Abdeckung (11) fließt, am Fließen zu dem Eingriffsbefestigungsbereich (10a, 11d) zu hindern, während der Eingriffsbefestigungsbereich (10a, 11d) auf einem seitlichen Oberflächenbereich (11b) bereitgestellt wird, der durch Zurückfalten der oberen Oberfläche der Abdeckung (11) nach unten geformt ist und eingreifend das Unterbringungsgehäuse (10) fixiert.

2. Eine tropfsichere Struktur für eine Wischermotorvorrichtung gemäß Anspruch 1, **dadurch gekennzeichnet, dass**
ein über der Muffe (8) angeordneter zylindrischer Bereich (11f) auf den Verlängerungsbereich (11e) der Abdeckung (11) geformt ist und die mit der Ausgangswelle (3) verbundene Unterseite einer wasserdichten Kappe (12) um die spitze Endseite des zylindrischen Bereichs (11) angeordnet ist, um eine tropfsichere Struktur zu bilden.

## Revendications

1. Dispositif de moteur d'essuie-glace (1) ayant une structure étanche aux gouttes, ledit dispositif ayant une portion de circuit d'entraînement (6) d'un moteur d'essuie-glace disposée d'une manière adjacente à un arbre de sortie (3) du moteur d'essuie-glace, ledit arbre de sortie (3) étant supporté en rotation par un manchon (8) ;
ladite structure étanche aux gouttes incluant un couvercle (11) pour protéger une ouverture supérieure d'un boîtier de réception (10) pour loger ladite portion de circuit d'entraînement (6), ledit couvercle (11) ayant une portion d'extension (11e) sur sa surface supérieure (11a) qui s'étend à une position de telle sorte que la circonférence extérieure du manchon (8) est entourée par ledit couvercle (11) et s'adapte sur l'arbre de sortie (3), par quoi une portion de fixation d'engagement (10a, 11d) assure la mise en prise du couvercle (11) avec le boîtier de réception (10), **caractérisé en ce que**
une ou des nervures de guidage (11g) pour empêcher l'eau, qui s'écoule de la portion d'extension (11e) sur la surface supérieure (11a) du couvercle (11), de s'écouler à la portion de fixation de mise en prise (10a, 11d) sont prévues sur la surface supérieure (11a) du couvercle (11), ladite portion de fixation d'engagement (10a, 11d) étant réalisée sur une portion de surface latérale (11b) qui est formée en repliant la surface supérieure du couvercle (11) vers le bas et la met en prise avec ledit boîtier de réception (10).

2. Structure étanche aux gouttes d'un dispositif de moteur d'essuie-glace selon la revendication 1, **caractérisée en ce que**
une portion cylindrique (11f) montée sur le manchon (8) est formée sur ladite portion d'extension (11e) dudit couvercle (11), et le côté de base d'un capuchon étanche à l'eau (12) fixé audit arbre de sortie (3) est localisé autour du côté de l'extrémité de pointe de ladite portion cylindrique (11) pour créer une structure étanche aux gouttes.
